# EUROPÄISCHE PATENTSCHRIFT

(11) **EP 0 692 791 B1**
(45) Veröffentlichungstag und Bekanntmachung des Hinweises auf die Patenterteilung: **10.02.1999**
(21) Anmeldenummer: 95810461.4
(22) Anmeldetag: 12.07.1995
(51) Int. Cl.: G11B 33/04

(54) **Plattenhalterung in einer CD-Kassette**
Disc holding device in a CD-cassette
Dispositif de maintien de disque dans une cassette de disque compact

(30) Priorität: 14.07.1994 CH 2257/94
(43) Veröffentlichungstag der Anmeldung: 17.01.1996
(73) Patentinhaber: AWM Werkzeugbau AG, 5630 Muri AG (CH)
(72) Erfinder: Krummenacher, Josef, CH-5630 Muri / AG (CH)
(74) Vertreter: AMMANN PATENTANWAELTE AG BERN

(56) Entgegenhaltungen:
- EP-A- 0 198 083
- EP-A- 0 429 195
- DE-A- 3 425 579
- DE-A- 4 107 218
- DE-U- 9 103 114

## Beschreibung

Die vorliegende Erfindung betrifft eine Plattenhalterung in einer CD-Kassette, gemäss Oberbegriff des Anspruchs 1. Eine solche Plattenhalterung ist bekannt aus der DE-A-41 07 218. Die Haltezungen dieser Plattenhalterung sind als Verbindungsbogen zwischen einem sie verbindenden Innenteil und einem ringförmigen, vertieften Bereich zwischen der Abstützung und den Haltezungen ausgebildet. Zweck dieser Ausbildung ist es, durch Druck auf den genannten Innenteil die Haltezungen so zu verformen, dass die Platte leicht aufgesetzt und insbesondere entnommen werden kann. Die Festigkeit der Haltezungen stellt kein besonderes Problem dar, da dieselben innen und aussen mit vollen Kassettenteilen direkt verbunden sind. Dagegen muss elastisch gut verformbares Material gewählt werden, um die zur angestrebten Verformung genügende Beweglichkeit zu erziehlen. Hierzu wurde im allgemeinen schlagfestes Polystyrol vewendet, welches undurchsichtig und biegsam ist, so dass es bei hoher Beanspruchung, beim Herunterfallen der Kassette, nicht bricht.

Demgegenüber wird nun erfindungsgemäss angestrebt, auch glasklares, durchsichtiges Polystyrol verwenden zu können, damit die Platte und die darauf befindlichen Angaben für die Kunden von beiden Seiten ersichtlich sind. Glasklares Standard-Polystyrol ist aber sehr spröde, so dass sich die bisherige Halterung nicht eignet, da sie nicht federn kann. Um sowohl eine gute Halterung als auch genügende Festigkeit der Haltezungen bzw. eine auch beim Falltest genügende Bruchsicherheit zu gewährleisten, wird erfindungsgemäss die Halterung gemäss Kennzeichen des Anspruchs 1 ausgeführt.

Es ist zwar aus DE-U-91 03 114 auch bekannt, die Haltezungen so auszubilden, dass sie auch bei eingesetzter Platte noch eine hinterschnittene Haltefläche aufweisen, aber auch dieser bekannten Ausführung lag nicht die genannte neue Zielsetzung zugrunde und es war daher auch nicht die Gesamtheit der zur Problemlösung erforderlichen Bedingungen erfüllt.

Die Erfindung wird nun anhand der Zeichnung näher erläutert.
- Fig. 1: zeigt einen Querschnitt durch eine bekannte Ausführung,
- Fig. 2 und 3: zeigen einen Querschnitt durch eine erste erfindungsgemässe Ausführungsform, ohne bzw. mit eingesetzter CD-Platte,
- Fig. 4 und 5: zeigen je einen Querschnitt durch eine zweite erfindungsgemässe Ausführungsform, ohne bzw. mit eingesetzter CD-Platte, und
- Fig. 6 und 7: zeigen eine dritte erfindungsgemässe Ausführungsform.

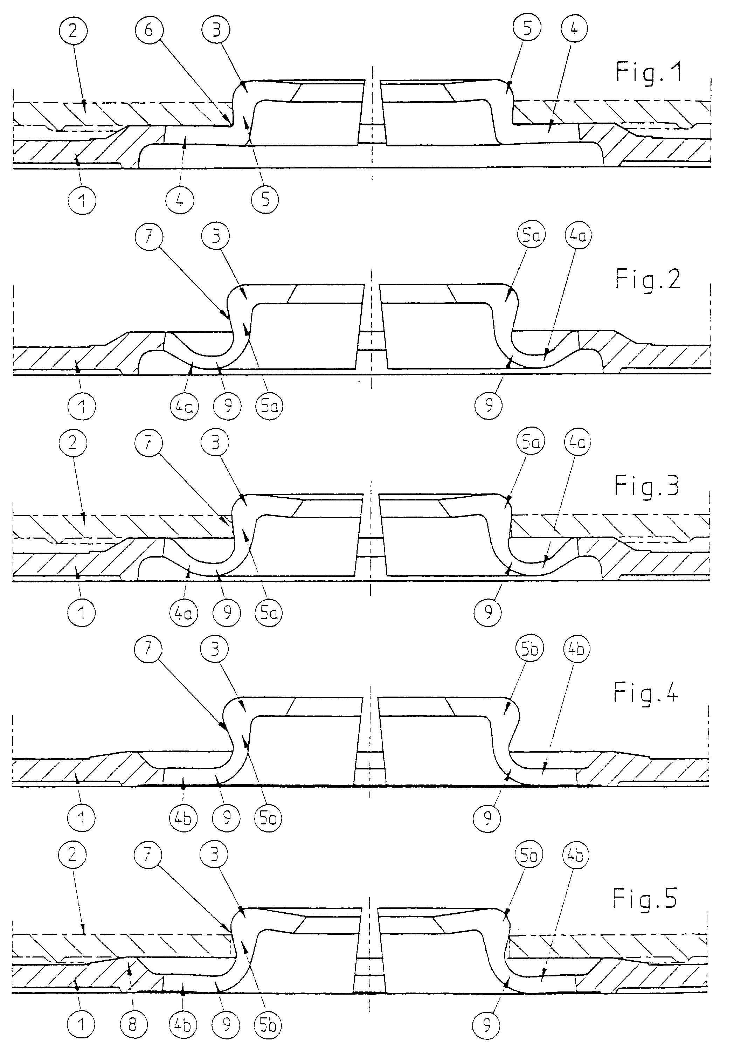

Figur 1 zeigt die bekannte Ausführung, wobei nur der Mittelteil 1 der Kassette mit der Halterung für die CD-Platte 2 dargestellt ist. Der Halterung der Platte 2 dient ein Kranz von Z-förmigen Zungen 3 mit je einem radialen Arm 4 und einem an dessen inneren Ende anschliessenden, im wesentlichen axialen Arm 5. Am Uebergang zwischen den radialen und axialen Armen 4 und 5 besteht praktisch eine scharfe Kante 6. Die Platte 2 liegt direkt auf den Mittelteil und die Oberseite der radialen Arme 4 auf und greift praktisch spielfrei in die scharfe Kante 6 zwischen den Armen 4 und 5 der Haltezungen ein. Wenn nun gemäss obenstehendem der Mittelteil 1 mit den Haltezungen 3 aus glasklarem durchsichtigem Polystyrol besteht, welches besonders unelastisch und brüchig ist, besteht die grosse Gefahr, dass beim Fall-Test die Platte 2 beim Aufprall auf der Druckseite die praktisch unelastischen Haltezungen an der Uebergangsstelle zwischen dem radialen und dem axialen Arm abschert oder abbricht und damit die Halterung unbrauchbar wird. Zudem besteht die Gefahr, dass die Platte 2 aus der Halterung springt, weil die die Platte 2 stützenden Aussenseiten der Arme 5 kurz und praktisch nicht hinterschnitten sind. Sofern die Haltezungen beim Aufprall in der Plattenebene nicht überhaupt brechen, werden sie so nach innen verformt, dass ihre äussere Haltefläche nach innen geneigt sind und ein Abgleiten der Platte von den Haltezungen direkt begünstigt wird.

Diese Nachteile sollen erfindungsgemäss behoben werden. Die Figuren 2 und 3 zeigen ein erstes Ausführungsbeispiel, in welchem entsprechende Teile gleich bezeichnet sind wie in Figur 1. Die radialen Arme 4a der Haltezungen sind nach unten gebogen und liegen damit im Abstand von der Platte 2. Entsprechend sind die axialen Arme 5a verlängert, und ihre äusseren Stützflächen 7 für die Platte 2 sind stark hinterschnitten, wie insbesondere Figur 2 zeigt. Aber auch bei eingesetzter Platte 2 gemäss Figur 3 sind diese Stützflächen noch erheblich hinterschnitten. Durch die gebogenen, stark verlängerten Haltezungen wird die Elastizität derselben stark erhöht, und da die Platte 2 mit ihrer unteren scharfen Innenkante überhaupt nicht mehr an die hinterschnittene Stützfläche 7 der Haltezunge anliegt, entsteht dort auch bei hoher radialer Belastung kein Kerb- oder Schereffekt der einen Bruch der Haltezunge begünstigt. Im Gegenteil tritt anstelle der Kante 6 ein kontinuierlicher Uebergangsbogen 9. Es ist daher sowohl eine Zerstörung der Halterung oder auch ein Abspringen der Platte 2 bei Schlagbeanspruchung wirksam verhindert. Die erhöhte Elasitizität der Haltezungen erleichtert auch das Aufsetzen und Abheben der Platte 2.

Die Figuren 4 und 5 zeigen ein weiteres Ausführungsbeispiel, in welchem entsprechende Teile entsprechend bezeichnet sind. In diesem Falle sind zwar die radialen Arme 4b der Haltezungen 3 eben ausgebildet, aber der Kranz von Haltezungen ist von einem ringförmigen Stützwulst 8 umgeben, welcher die gemäss Figur 5 eingesetzte CD-Platte 2 im Abstand über den radialen Armen 4b der Haltezungen hält. Auch in diesem Falle sind die äusseren Stützflächen der axialen Arme 5b stark hinterschnitten und zwar auch noch bei eingesetzter Platte 2 gemäss Figur 5. Es ergeben sich damit entsprechende Vorteile wie bei der Ausführung gemäss Figuren 2 und 3, das heisst, die Elastizität der Haltezungen zwischen der Anlage der Platte 2 und den äusseren Ansatzstellen der Haltezungen ist erheblich erhöht, es können im kritischen Bereich keine Kerb- und Scherbeanspruchungen auftreten und auch bei starker Beanspruchung ist ein Abspringen der Platte aus der Halterung wirksam verhindert.

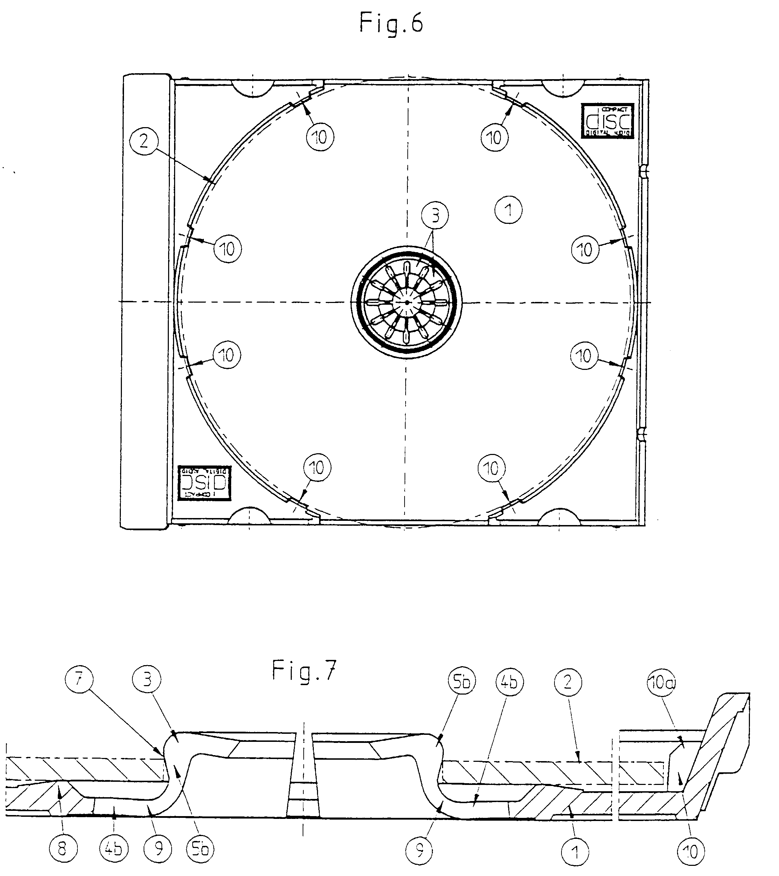

Die Figuren 6 und 7 zeigen eine Ausführungsform, die hinsichtlich der Plattenhalterung im Zentrum der Kassette derjenigen nach Figuren 4 und 5 entspricht. Figur 6 zeigt eine Draufsicht auf die offene Kassette. Wie diese Figur zeigt, sind am Rande der trogartigen Vertiefung für die Plattenaufnahme Gruppen von Nocken oder Rippen 10 vorgesehen, welche das radiale Spiel der Platte 2 und damit auch die Gefahr eines Bruches von Zungen 3 bzw. des Herausspringens der Platte aus ihrer Halterung beschränken. Dieses Spiel kann 0,3 bis 0,9 mm betragen. Die Nocken oder Rippen 10 weisen oben eine Anschrägung 10a auf, welche das Einsetzen der Platte 2 erleichtert.

## Patentansprüche

1. Plattenhalterung für eine CD-Kassette (2), mit einem Kranz von Haltezungen (3) die federnd in eine eingestzte Platte (2) eingreifen, und mit einer Abstützung (8) ausserhalb der Haltezungen welche die axiale Lage der Platte (2) in der Kassette bestimmt, dadurch gekennzeichnet, dass die Haltezungen (3) ausgehend von der Abstützung (8) freitragend mit je einem radialen Arm (4) und einem axialen Arm (5) einragen, wobei die Platte (2) durch die Abbstützung (8) im Abstand über den radialen Armen (4) gestützt ist und die äussere Stützfläche (7) der axialen Arme (5) auch bei eingesetzter Platte (2) hinterschnitten ist, und dass ein kontinuierlicher Übergangs- bzw. Verbindungsbogen (9) zwischen dem radialen und dem axialen Arm (4, 5) vorgesehen ist.

2. Halterung nach Anspruch 1, dadurch gekennzeichnet, dass die radialen Arme (4) gekrümmt sind.

3. Halterung nach Anspruch 1, dadurch gekennzeichnet, dass am äusseren Ende der radialen Arme ein ringförmiger Stützwulst (8) für eine Platte (2) vorgesehen ist.

4. Halterung nach einem der Ansprüche 1 - 3, dadurch gekennzeichnet, dass die Kassette am Rand Nocken oder Rippen (10) aufweist, welche das radiale Spiel der Platte in der Kassette begrenzen.

5. Halterung nach Anspruch 4, dadurch gekennzeichnet, dass am Umfang verteilt mehrere Gruppen von Nocken oder Rippen (10) vorgesehen sind.

6. Halterung nach Anspruch 5, dadurch gekennzeichnet, dass die Nocken oder Rippen (10) eine Anschrägung aufweisen, welche das Einführen der Platte erleichtert.

## Claims

1. Disk holder for a CD box (2), comprising a crown of retaining tongues (3) which engage in an inserted disk (2) in an elastic manner, as well as a support (8) outside the retaining tongues which determines the axial position of the disk (2) inside the box, characterised in that a radial arm (4) and an axial arm (5) of each retaining tongue (3) unsupportedly extends inwards from the support (8), the disk (2) being supported at a distance above the radial arms (4) by the support (8), and the outer supporting surface (7) of the axial arms (5) being undercut even when the disk (2) is inserted, and in that a continuous arched transition resp. connection (9) is provided between the radial and the axial arm (4, 5).

2. Holder according to claim 1, characterised in that the radial arms (4) are curved.

3. Holder according to claim 1, characterised in that an annular supporting bead (8) for a disk (2) is provided at the external end of the radial arms.

4. Holder according to one of claims 1 to 3,
characterised in that the edge of the box is provided with projections or ribs (10) which limit the radial play of the disk in the box.

5. Holder according to claim 4, characterised in that several groups of projections or ribs (10) are provided which are arranged on the circumference.

6. Holder according to claim 5, characterised in that the projections or ribs (10) have a chamfering which facilitates the insertion of the disk.

## Revendications

1. Retenue à disque pour une boîte à CD (2), comprenant une couronne de languettes de retenue (3) qui s'engagent de manière élastique dans un disque (2) en place, ainsi qu'un appui (8) à l'extérieur des languettes de retenue, ledit appui déterminant la position axiale du disque (2) dans la boîte, caractérisé en ce que les languettes de retenue (3) font saillie dudit appui (8) vers l'intérieur par l'intermédiaire d'un bras radial (4) et d'un bras axial (5) de chaque languette, le disque (2) étant soutenu par l'appui à l'écart des bras radiaux (4) et au-dessus de ces derniers, et la surface d'appui (7) extérieure des bras axiaux (5) étant contre-dépouillée même lorsque le disque (2) est en place, et qu'un arc de transition (9) ou de connexion est prévu entre le bras radial (4) et axial (5).

2. Retenue selon la revendication 1, caractérisée en ce que les bras radiaux (4) sont courbés.

3. Retenue selon la revendication 1, caractérisée en ce qu'un bourrelet de soutien (8) annulaire pour un disque (2) est prévu à l'extrémité extérieure des bras radiaux.

4. Retenue selon l'une des revendications 1 à 3, caractérisée en ce que le bord de la boîte présente des ergots ou nervures (10) qui limitent le jeu radial du disque dans la boîte.

5. Retenue selon la revendication 4, caractérisée en ce que plusieurs groupes d'ergots ou de nervures (10) sont prévus qui sont répartis sur la circonférence.

6. Retenue selon la revendication 5, caractérisée en ce que les ergots ou nervures (10) présentent un chanfreinage qui facilite l'insertion du disque.
